# EUROPÄISCHE PATENTSCHRIFT

(11) **EP 0 976 839 B1**
(45) Veröffentlichungstag und Bekanntmachung des Hinweises auf die Patenterteilung: **05.12.2001**
(21) Anmeldenummer: 99114759.6
(22) Anmeldetag: 25.04.1994
(51) Int. Cl.: C21B 5/02

(54) **Verfahren zur Erzeugung von Metall aus Metallerzen**
Method for producing metal from metal ores
Procédé pour la production de métal à partir de minerais métalliques

(30) Priorität: 26.04.1993 DE 4313630; 21.12.1993 DE 4343768
(43) Veröffentlichungstag der Anmeldung: 02.02.2000
(62) Teilanmeldung aus: 94106439.6
(73) Patentinhaber: Der Grüne Punkt-Duales System Deutschland Aktiengesellschaft, 51145 Köln (DE)
(72) Erfinder: de Haas, Hans, Dr., 28865 Lilienthal (DE); Janz, Joachim, Dr., 28876 Oyten (DE); Mohnkern, Horstmar, 27721 Ritterhude (DE); Voss, Manfred, 28355 Bremen (DE)
(74) Vertreter: Eisenführ, Speiser & Partner

(56) Entgegenhaltungen:
- DE-A- 2 935 544
- DE-A- 4 104 252
- GB-A- 2 185 970
- US-A- 3 998 606
- PATENT ABSTRACTS OF JAPAN vol. 18, no. 203 (M-1590), 11. April 1994 (1994-04-11) & JP 06 008247 A (MITSUBISHI MATERIALS), 18. Januar 1994 (1994-01-18)

## Beschreibung

Die Erfindung betrifft die Verwendung von Kunststoff in einem metallurgischen Schachtofen, insbesondere einem Hochofen zur Erzeugung von Metall aus Metallerzen, insbesondere von Roheisen aus Eisenerz, bei dem das Metalloxid enthaltende Erz mit einem aus Kunststoff und/oder Wasserstoff (sowie ggf. deren Verbindungen) enthaltenden Reduktionsgas in Reaktionskontakt gebracht wird, welches zuvor aus kohlenstoff- und/oder kohlenwasserstoffhaltigen Substanzen gewonnen wurde.

Es ist geläufig, daß das zum großen Teil aus (selbst bei Eisen verschiedenen) Metalloxiden bestehende Erz einem Reduktionsprozeß unterworfen-werden muß, ehe das Metall gewonnen werden kann. Diese Reduktion geschieht mit Hilfe von Kohlenstoff und ggf. Wasserstoff - oder auch deren Verbindungen - die in einem Reduktionsgas enthalten sind, das zur Einwirkung auf das Metallerz gebracht wird.

Hierauf gelangt das reduzierte Metallerz in einen Schmelzprozeß. Das für die Reduktion benötigte Gas wird dabei im Bereich des Reduktions- und Schmelz-Prozesses selbst gewonnen, indem kohlenstoffhaltige Stoffe (z.B. Koks, Kohle, Öl, Erdgas) in die Zone des bereits reduzierten und erhitzten Metalles zugegeben werden, wodurch unter Zugabe von (Luft)-Sauerstoff eine Zerlegung bzw. Umwandlung in kohlenstoffhaltiges Gas erfolgt, welches der voraufgehenden Reduktion zugeführt wird.

Bekannt sind insoweit der herkömmliche Hochofenprozeß, bei dem im Hochofen - von oben nach unten fortlaufend - sowohl die Reduktion des Metallerzes als auch die Bildung des Reduktionsgases sowie die anschließende Schmelzverflüssigung des Metalls stattfinden. Bei diesem Hochofenprozeß wird dem Eisenerz und ggf. Zuschlagstoffen Koks als Kohlenstoffträger beigemischt. Es ist auch bekannt, zur besseren Steuerung des Hochofenprozesses und zur Ersparnis von Koks in den Windstrom im Bereich des Gestelles des Hochofens Öl oder Kohlenstaub über Lanzen mit einzublasen, wodurch auch der Verbrauch an Koks reduziert wird. Dieses zusätzlich eingeblasene Material (Öl oder Kohlenstaub) muß sehr fein zerteilt eingeführt werden, um eine saubere und ausreichende Vergasung zu gewährleisten. Zusammenfassungen über das Einblasen von Kohlenstaub in Hochöfen enthalten zwei Artikel in der Zeitschrift "Stahl und Eisen", 101 (1981) vom 12.1.81, S. 35-38 und 105 (1985), Nr. 4 vom 25.2.85, S. 211-220. Das Einblasen von Kohlenstaub wurde insbesondere im Zuge steigender Ölpreise forciert. Es stellte sich dabei heraus, daß beim Einblasen wegen der kurzen, zur Verfügung stehenden Zeit von ca. 10 ms gute Ergebnisse, nämlich eine fast vollständige Vergasung des Kohlenstaubs, nur bei Korngrößen unterhalb 0,1 mm zu erzielen waren, selbst wenn Versuche bei einigen Anlagen auch mit größeren Korngrößen durchgeführt wurden.

Es ist auch bereits vorgeschlagen worden, statt des Eindüsens von Öl oder Kohlenstaub andere kohlenstoffhaltige Abfallstoffe wie z.B. getrockneten Klärschlamm oder anderen kohlenstoffhaltigen Abfall wie Müll, Altpapier, Stroh, Lignit sowie Abfall von Holz, Kunststoff, Gummi oder dergl. einzubringen (DE-A 29 35 544). Mangels entsprechender Versuche oder Ergebnisse werden jedoch nur Vermutungen angestellt, wie diese Stoffe in den Hochöfen eingebracht werden sollen. Auch in der DE-A 41 04 252 wird vorgeschlagen, kohlenstoffhaltige Abfallstoffe dieser Art über die Windformen in feinkörniger oder staubförmiger Form in einen Hochofen einzublasen, wobei als Beispiel das Einbringen von Klärschlamm (rieselfähiger Staub) angeführt wird. Auch bei diesem Verfahren wird die Notwendigkeit der Feinkörnigkeit des einzublasenden Stoffes ausdrücklich betont.

Ausgehend von dem eingangs geschilderten bekannten Verfahren ist es die Aufgabe der Erfindung, Kunststoffabfall, auch in organisch und/oder anorganisch verunreinigter Form, als Lieferant für die Bestandteile des Reduktionsgases nutzbar zu machen. Kunststoffabfall fällt dauernd in großen Mengen an und stellt ein ernsthaftes Entsorgungsproblem dar. Er liegt zumeist, wenn nicht ausschließlich, in fester Form vor, sei es als - häufig stark verunreinigter - Verpackungsmüll, sei es als Verschnitt o.ä. im Zuge der Produktion von Kunststoffgegenständen.

Diese Aufgabe wird gemäß Anspruch 1 gelöst.

Es ist zwar bereits vorgeschlagen worden, Kunststoffreste als Lieferant eines Reduktionsmittels im Hochofenprozeß zu nutzen und somit stofflich zu verwerten. Die bekannte Maßnahme sieht jedoch vor, in einem vorgeschalteten Extrusionsprozeß gemischte Kunststoffreste durch Temperatur- und Schereinwirkung soweit zu einem niedermolekularen Stoff abzubauen, daß dieser als Schwerölsubstitut in den Windstrom eines Hochofens eingeblasen werden kann. Diese sogenannte degradative Extrusion zur Verflüssigung des Kunststoffmaterials stellt jedoch eine apparativ und verfahrenstechnisch aufwendige Maßnahme dar, die den Gesamtprozeß erschwert und verteuert. Zudem wird dieses Aufbereitungsverfahren durch die in Kunststoffabfällen enthaltenen metallischen, organischen und anorganischen Verunreinigungen empfindlich gestört.

Wie bereits erwähnt, muß bei dem bekannten, zusätzlichen Einblasen von Öl oder Kohlenstaub in den Windstrom im Bereich des Schachtofens, insbesondere Hochofens, das Material in sehr fein zerteilter Form eingeblasen werden, um wegen der kurzen zur Verfügung stehenden Zeit eine einwandfreie Vergasung ohne nennenswerte Rußbildung zu erreichen. Liegt die maximale Größe der Kohleteilchen nicht bei ca. 0,1 mm, sondern bei größeren Korngrößen, so führt dies nur zu unzureichenden Ergebnissen.

Der Grund dafür liegt vornehmlich in den relativ geringen Anteilen an flüchtigen Bestandteilen bei der Kohle, so daß ein "Zerspratzen" der Einzelpartikel und damit eine weitere Erhöhung der Reaktionsoberfläche nicht in ausreichendem Umfange erfolgen kann. Beim Einblasen von Öl, das praktisch weitestgehend aus flüchtigen Bestandteilen besteht, ist jedoch gleichfalls ein Zerstäuben zu Partikelgrößen deutlich unter 0,1 mm erforderlich.

Es erschien daher zunächst naheliegend, daß auch Kunststoff, der in der chemischen Zusammensetzung dem Öl recht nahe kommt, zu einer vergleichbaren Korngröße aufgemahlen werden muß, um eine ausreichende, schnelle Reaktion im Hochofen zu gewährleisten. Eine solche feine Zermahlung ist jedoch bei Kunststoffen, insbesondere Thermoplasten, unmöglich, da das Material bei zu feiner Zermahlung klebrige Eigenschaften annimmt. Es ist auch bereits daran gedacht worden, solche Kunststoffe auf niedrige Temperaturen zu kühlen und dieses dann spröde Material danach zu zermahlen. Ein solches Verfahren scheidet jedoch vom Aufwand her für die vorliegenden Zwecke aus.

Es wurde jedoch überraschenderweise gefunden, daß beim Einblasen von Kunststoff in den Windstrom eines metallurgischen Schachtofens sehr gute Ergebnisse erzielt werden, wenn der Kunststoff nach einem Zerkleinern, Shreddern oder thermischen Vermahlen mit einer weitaus höheren Teilchengröße, nämlich vorwiegend im Bereich von 1 - 10 mm, insbesondere bei 5 mm liegt; eine solche Teilchengröße ist ohne großen Aufwand zu erreichen. Diese Teilchengröße hat gleichzeitig den Vorteil, daß im Bereich der Kunststoffaufbereitung, Fluidisierung und Dosierung keine Explosionsgefahr - wie z.B. beim Einblasen von Kohlenstaub - besteht, so daß als Fluidisierungsgas kein Inertgas erforderlich ist, sonder Preßluft eingesetzt werden kann. Besonders gute Ergebnisse sind zu erzielen, wenn der Kunststoff in Form eines Agglomerats mit hoher spezifischer Oberfläche eingeblasen wird. Hierbei hat sich insbesondere eine Schüttdichte des Kunststoff-Agglomerats von größer als 0,35 bewährt.

Der Grund für dieses überraschende Verhalten des Kunststoffs dürfte in Besonderheiten seines stofflichen Aufbaus nach der Zerkleinerung liegen: Während bei dem - chemisch ähnlich aufgebauten - Öl die sich bildenden kompakten Tröpfchen ein sehr ungünstiges Verhältnis von Oberfläche zur Masse und somit nur für kleine Durchmesser eine ausreichende Reaktionsfähigkeit aufweisen, ist bei Kunststoff durch den Zerkleinerungsprozeß die spezifische Oberfläche durch die Kombination aus mechanischer und thermischer Beanspruchung so zerklüftet und damit vergrößert, daß das Material auch nach nur teilweisem Zerkleinern eine hervorragende Reaktionsfähigkeit aufweist.

Es wurde somit gefunden, daß Kunststoff bzw. Abfall-Kunststoff bei Anwendung eines einstufigen Reduktionsverfahrens wie dem Hochofenprozeß nach einer wenig aufwendigen Vorzerkleinerung als wertvolles Reduktionsmittel eingesetzt werden kann, wodurch nicht nur Kohle bzw. Koks gespart, sondern auch Kunststoffabfälle nutzbringend verwertet werden können.

In dem Fall, daß der metallurgische Schachtofen ein Hochofen ist, wird der Kunststoff über Lanzen, die in Luftdüsen oder Windformen angeordnet sind, in fluidisierter Form in den Luftstrom eingeblasen. Hierbei können entweder alle Lanzen mit fluidisierten Kunststoffteilchen beschickt werden, oder es werden einige der Lanzen mit fluidisierten Kunststoffteilchen beschickt, während den anderen Öl oder Kohle (wie bisher) zugeführt wird. In einem solchen Falle ist es von Vorteil, die mit Kunststoffteilchen und die mit Öl oder Kohle beschickten Lanzen untereinander gleichmäßig verteilt um den Umfang der Windformanordnung anzuordnen.

Der Einblasdruck an den Lanzen liegt vorzugsweise 0,5 • 10⁵ bis 1,5 • 10⁵ Pa über dem Druck im Hochofen. Die Strömungsgeschwindigkeit in den Lanzen ist so hoch zu bemessen, daß Verbackungen (durch Auf- oder Anschmelzen) des Kunststoffs in der Lanze durch Wärmerückstrahlung aus dem Ofeninnern vermieden werden, das Verhältnis von Strömungsgeschwindigkeit zum Lanzenquerschnitt liegt vorzugsweise zwischen 20000 und 40000 1/sec•m, insbesondere bei 25000 1/sec•m. Eine Beachtung dieser Kennzahl war beim Einblasen von Kohlenstaub oder Öl in die Lanzen der Windform eines Hochofens nicht erforderlich, da diese anderen Stoffe nicht schmelzen und somit keine Verbackungen zu befürchten sind.

Die Mischwindtemperatur in einem Hochofen liegt normalerweise im Bereich von 1000 bis 1250°C. Eine zu niedrige Temperatur führt zu einer ungenügenden oder zu langsamen Vergasung des Kunststoffes. Zweckmäßigerweise liegt die Mischwindtemperatur deshalb über 1100°C.

Die Einblasmenge von Kunststoff kann über einen weiten Bereich schwanken; sie kann jedoch wegen der besonderen Eigenschaft von Kunststoff-Agglomerat höher liegen als z.B. beim Einblasen von Öl. Liegt die Einblasmenge des Kunststoffs über 70 kg/t RE, so wird dem Windstrom zur besseren Vergasung O₂ zugegeben. Für jedes den Wert von 70 kg/t RE überschreitende kg/t RE hat sich eine Anreicherung des Windes um 0,05-0,1%, vorzugsweise 0,08%, O₂ als günstig herausgestellt.

Die Dosierung und Fluidisierung der Kunststoffteilchen kann auf verschiedene Weise realisiert werden. Ein Weg besteht darin, die Kunststoffteilchen in getrennten Vorrichtungen nacheinander zu fluidisieren und anschließend zu dosieren. Diese Lösung hat den Vorteil, daß die Dosiervorrichtung auf einfache Weise dargestellt werden kann, z.B. durch eine mechanische Schnecken-Dosiervorrichtung oder durch eine Zellenrad-Dosiervorrichtung. Ein anderer Weg besteht darin, die Kunststoffteilchen in einer kombinierten Fluidisierungs- und Dosiervorrichtung zu fluidisieren und zu dosieren. Diese Lösung erfordert jedoch wegen des schwankenden Ofendruckes eine schnelle Regeleinrichtung, mit der der Einblasdruck dem Ofendruck angepaßt werden kann. Eine besonders einfache Lösung besteht in der Verwendung einer druckdichten Zellenradschleuse.

Die Erfindung wird nachfolgend anhand eines Ausführungsbeispiels unter Bezug auf die beigefügten Zeichnungen näher erläutert. Es zeigen:
- Figur 1: eine schematische Darstellung eines Hochofens einschließlich der entsprechenden Einrichtungen zur Zuführung von fludisiertem Kunststoff und einschließlich der entsprechenden Einrichtungen zur Zuführung eines erhitzten Windstromes;
- Figur 2: eine alternative Ausführungsform; und
- Figur 3: eine Düsen-Lanzen-Anordnung zum Einblasen von fluidisiertem Kunststoff in die Windformen oder Düsen eines Hochofens.

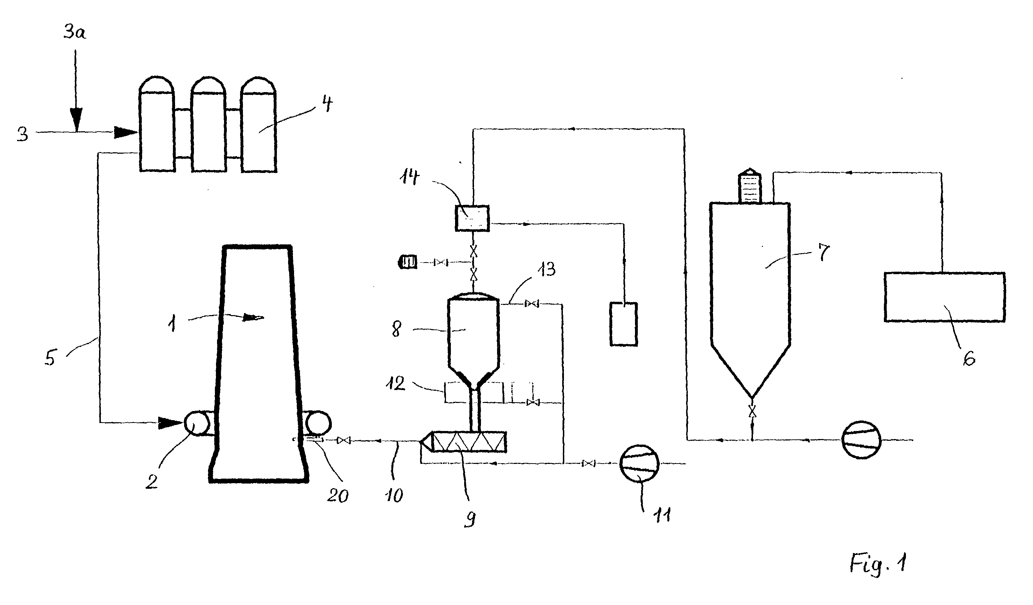

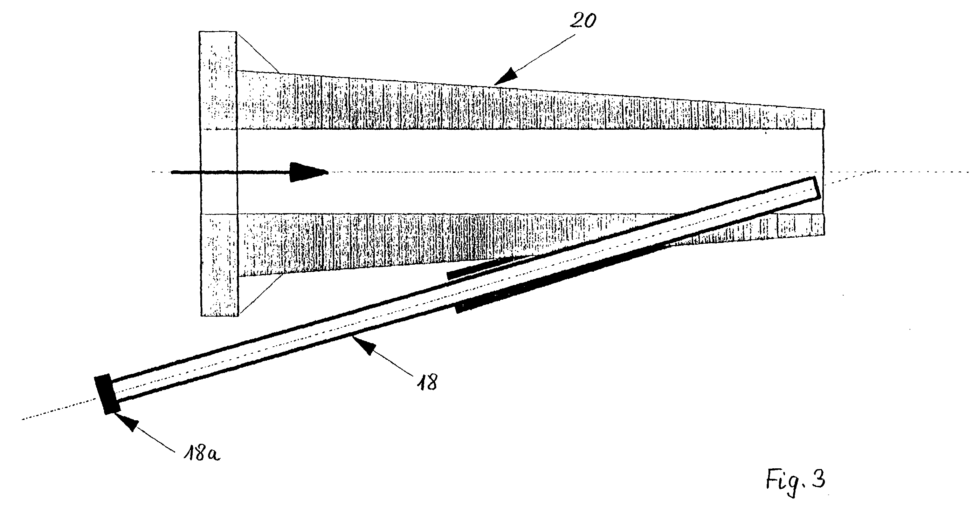

In Figur 1 ist ein in üblicher Weise aufgebauter Hochofen 1 gezeigt, der im unteren Gestellbereich eine Vielzahl von gleichmäßig um den Umfang verteilten Düsen oder Windformen 20 (s. Figur 3) aufweist, denen über eine Leitung 5 und eine Ringleitung 2 in einem Winderhitzer 4 erhitzter Wind 3 zugeführt wird. Darüber hinaus kann der Wind 3 auch noch mit Sauerstoff 3a (O₂) angereichert werden. Der Übersichtlichkeit halber ist in Figur 1 nur eine Düse 20 angedeutet.

Einige oder alle der Düsen 20 weisen eine oder mehrere Lanzen 18 auf, über die Zusatzbrennstoff eingeblasen werden kann. Bei den bisher bekannten Hochöfen war dies entweder Kohlenstaub oder Öl, wodurch ein besseres Betriebsverhalten des Hochofens 1 und eine Ersparnis an Koks zu erzielen war. Die übliche Anzahl von Düsen 20 der Windformanordnung beträgt z.B. 32, und jede Düse hat einen Durchmesser von z.B. 140 mm. Bei der Zuführung von Kohlenstaub oder Öl sind meist zwei Lanzen vorgesehen, die einen Durchmesser von typischerweise 12 bzw. 8 mm haben. Im vorliegenden Fall ist in jeder Düse 20 nur eine Lanze 18 zur Zuführung von fluidisiertem Kunststoff vorgesehen und hat z.B. einen Durchmesser von 28 mm.

In der Windformanordnung können entweder alle Lanzen 18 mit fluidisiertem Kunststoff beschickt werden, oder die Düsen 20 sind gemischt bestückt, d.h., einige Düsen weisen z.B. zwei Öllanzen auf, während andere Düsen 20 wiederum mit einer Kunststofflanze 18 bestückt sind. Es ist jedoch zweckmäßig, die Verteilung von Kunststofflanzen 18 und Öllanzen gleichmäßig untereinander über den Umfang der Windformanordnung vorzunehmen.

Die Aufbereitung des Kunststoffes erfolgt im vorliegenden Ausführungsbeispiel folgendermaßen:

Aus einer Kunststoffaufbereitungsanlage 6 wird einem Silo 7 zerkleinerter Kunststoff in der Form eines Agglomerats mit hoher spezifischer Oberfläche zugeführt und einer Korngröße von 1 - 10 mm, vorzugsweise 5 mm. Bewährt hat sich die Verwendung von Kunststoff, der zu einem Agglomerat mit einer Schüttdichte von größer als 0,35 führt. Für diese Zwecke sind Kunststoff-Verpackungsbecher o.dgl. geeignet, während z.B. Kunststoffolien beim Zerkleinern zu einergeringeren Schüttdichte führen, so daß vor dem oder beim Einblasen besondere Vorkehrungen getroffen werden müssen, um eine ausreichende Menge einblasen zu können.

In Figur 1 ist dann ein Einblasgefäß 8 dargestellt, in das das Kunststoff-Agglomerat über ein Grobkornsieb 14 eingebracht und durch Einblasen eines Fluidisierungsgases mittels eines Gebläses 11 über Leitungen 12 und 13 fluidisiert wird. Bei einem Einblasgefäß von z.B. 3 m³ Volumen sind ca. 2-25 m³ Fluidisierungsgas/h erforderlich. Anschließend wird der fluidisierte Kunststoff in einer getrennten Dosiervorrichtung 9, z.B. einer mechanischen Schnecken-Dosiervorrichtung oder einer Zellenrad-Dosiervorrichtung, dosiert und über eine Leitung 10 den entsprechenden Lanzen 18 der Windformanordnung gleichmäßig zugeführt. Die Förderung der Kunststoffteilchen erfolgt hierbei mittels Flugstromförderung, d.h., bei hohem Gasanteil, z.B. bei einem Verhältnis von 5 bis 30 kg Kunststoff pro 1 kg Fluidisierungsgas. Als Fluidisierungsgas wird im vorliegenden Beispiel Preßluft verwendet, da wegen der Größe der Kunststoffteilchen von 1-10 mm keine Explosionsgefahr besteht.

Die Einblasmenge des Kunststoffes ist über weite Grenzen variierbar (z.B. 30-150 kg Kunststoff /t RE). Es wurde außerdem herausgefunden, daß bei gleich guter Vergasung eine um den Faktor 1,5 höhere Menge an Kunststoff im Vergleich zu Öl eingeblasen werden kann. Liegt die Einblasmenge des Kunststoffs über 70 kg/t RE, so wird zwecks guter Vergasung dem Windstrom zweckmäßigerweise O₂ zugegeben, wie bereits vorstehend erwähnt. Für jedes über dem Wert von 70 kg/t RE liegende kg Kunststoff /t RE sollte der Wind dann mit 0,05-0,1 % O₂ angereichert werden, vorzugsweise 0,08% O₂. Für eine gute Vergasung liegt die Mischwindtemperatur aus dem Winderhitzer 4 über 1100°C. Der Einblasdruck an den Lanzen 18 liegt zweckmäßigerweise 0,5 • 10⁵ bis 1,5 • 10⁵ Pa über dem Druck im Hochofen 1.

Da Kunststoff - bei höheren Temperaturen - im Gegensatz zu Kohlenstaub oder Öl - schmilzt, besteht die Gefahr von Verbackungen des Kunststoffes vor dem Austritt aus der Einblaslanze 18 durch Wärmerückstrahlung aus dem Inneren des Hochofens. Aus diesem Grunde muß die Strömungsgeschwindigkeit des Gases mit den schwebenden Kunststoffteilchen im Vergleich zum Rohrquerschnitt der Lanze 18 ausreichend hoch sein, um ein Auf- oder Anschmelzen und damit Verbacken des Kunststoffes in der Lanze 18 durch Wärmerückstrahlung zu vermeiden. Ein geeignetes Verhältnis der Strömungsgeschwindigkeit zum Lanzenquerschnitt liegt im Bereich von 20000 bis 40000 1/sec•m, vorzugsweise bei 25000 1/sec•m. Liegt dieser Wert zu niedrig, besteht die Gefahr von Verbackungen, liegt der Wert zu hoch, so tritt ein zu hoher Verschleiß in den Lanzen 18 auf. Darüber hinaus müssen bei allen Transportleitungen, insbesondere auch im Anschlußbereich 18a der Lanzen 18, Unstetigkeiten und Einschnürungen im Strömungsverlauf sowie Radien von kleiner als 1 m bei Krümmungen vermieden werden.

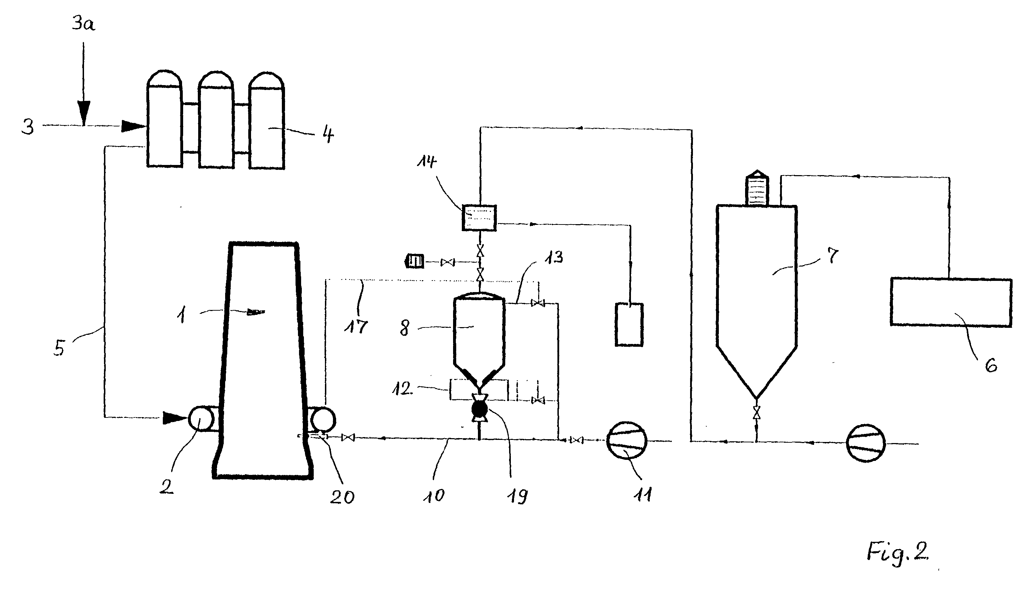

In der Anordnung nach Figur 1 erfolgt die Dosierung durch eine getrennte Dosiervorrichtung 9. Eine andere Lösung ist in Figur 2 gezeigt und kann darin bestehen, das Fluidisieren und Dosieren in einem Zuge durchzuführen. Hierzu ist im unteren Bereich des Einblasgefäßes ein Kugelhahn 19 als Dosiereinrichtung vorgesehen. Die Feineinstellung erfolgt über die Druckeinstellung und die Fluidisierungsgasmenge. Diese Lösung erfordert jedoch eine genaue und schnelle Regelung der Preßluftzufuhr an der oberen Leitung 13 des Einblasgefäßes 8 abhängig von dem schwankenden Innendruck des Hochofens 1. Zu diesem Zwecke ist also an geeigneter Stelle im Hochofen 1 ein Druckfühler vorgesehen, der über eine Regelschleife 17 ein Ventil in der Leitung 13 schnell nachregelt, um zu einer genauen Dosierung zu kommen.

Die Fludisierung und Dosierung der Kunststoffteilchen kann auch mittels einer druckdichten Zellenradschleuse erfolgen. In diesem Fall kann das Einblasgefäß 8 entfallen.

## Patentansprüche

1. Verwendung eines Kunststoffagglomerats mit zerklüfteter Oberfläche und somit hoher spezifischer Oberfläche als Reduktionsmittel durch Einblasen in einen metallurgischen Schachtofen, insbesondere einen Hochofen, zur Reduktion von Metalloxide enthaltenden Erzen, wobei das Kunststoffagglomerat in zerkleinerter, fluidisierter Form mit einer Teilchengröße des Agglomerats vorwiegend im Bereich 1-10 mm, insbesondere 5 mm, eingeblasen wird.

## Claims

1. Use of a plastics material agglomerate having a fissured surface and hence a large specific surface as a reducing agent by injection into a metallurgical shaft furnace, in particular a blast furnace, for the reduction of ores which contain metal oxides, the plastics material agglomerate being injected in comminuted and fluidised form and having a particle size of the agglomerate predominantly within the range from 1 to 10 mm, in particular 5 mm.

## Revendications

1. Utilisation d'un agglomérat de matière synthétique présentant une surface fissurée et donc une surface spécifique élevée, en tant qu'agent de réduction par soufflage dans un four vertical métallurgique, plus particulièrement dans un haut fourneau, de manière à réduire des minerais. contenant de l'oxyde métallique, moyennant quoi l'agglomérat de matière synthétique sous forme pulvérisée et fluidisée, la dimension des particules de l'agglomérat se trouvant principalement dans la plage comprise entre 1 et 10 mm, plus particulièrement 5 mm.
